# EUROPEAN PATENT APPLICATION

(11) **EP 4 586 140 A1**
(43) Date of publication of application: **16.07.2025**
(21) Application number: 24151869.5
(22) Date of filing: 15.01.2024
(51) Int. Cl.: G06N 3/045, G06N 3/084, G06N 3/098

(54) **AI-MODEL PERFORMANCE MONITORING**

(71) Applicant: Koninklijke Philips N.V., 5656 AG Eindhoven (NL)
(72) Inventor: WEHLE, Simon, Eindhoven (NL); GESSERT, Nils Thorben, Eindhoven (NL); GOOßEN, Andre, 5656AG Eindhoven (NL); HAHN, Artur, Eindhoven (NL); KOLOKOLNIKOV, Georgii, Eindhoven (NL); SCHADEWALDT, Nicole, Eindhoven (NL); WAECHTER-STEHLE, Irina, Eindhoven (NL)
(74) Representative: Philips Intellectual Property & Standards

(57) **Abstract**

The invention relates to performance monitoring of an AI-model using a twin-AI-model, wherein the twin-AI-model initially comprises a replica of the Al-model. Given an input (110) to the AI-model and the twin-AI-model, the twin-AI-model weights are re-trained (126, 146) based on either: a user feedback (124) on an Al-model output and the input; or an input prediction (142) of the twin-AI-model and the input. The AI-model and twin-AI-model are then compared (150) to determine a performance of the AI-model. Thereby this method provides active performance or reliability surveillance of the deployed AI-model.

## Description

### FIELD OF THE INVENTION

The invention relates to artificial intelligence in medicine.

### BACKGROUND OF THE INVENTION

Artificial Intelligence (AI) has been a rapidly evolving field and has shown significant potential in the medical domain over the last few years. AI models are increasingly being developed for a multitude of purposes, including medical chatbots, personalized medicine, drug discovery, and diagnostic or surgery assistance. In particular, the development of AI models for medical image analysis has seen a boom recently. These models are trained on large datasets of medical images and aim to automate the process of identifying abnormalities such as tumors, lesions, or fractures.

Despite the significant progress made so far, the deployment of AI models in the medical domain is often slowed down by strict guidelines and rules to ensure good functioning and avoid mistakes. In particular, doctors need to have some measure of confidence in the output generated by AI models. In other words, the reliability of the AI-models needs to be guaranteed. It is therefore important to establish the reliability of AI-models in the medical domain to ensure that they work accurately and consistently.

The central problem faced by users of AI models is reliability - is the output generated by the AI model reliable? It is crucial to establish trust in these models as it could have a direct impact on patient care and outcomes. If doctors do not trust the AI model output, they may ignore or second-guess the recommendations, which could potentially lead to adverse outcomes for the patient.

Establishing reliability and thus trust in AI models for medical image analysis is challenging. Data quality, model transparency, and interpretability are just a few of the factors that can influence trust in these models. It is, therefore, necessary to develop strategies that can help to build trust in these models and ensure that doctors have confidence in the results produced.

### SUMMARY OF THE INVENTION

It is, inter alia, an object of the invention to establish AI-model performance. This is achieved by providing methods of active monitoring of deployed AI-models. In particular, it is proposed to monitor performance of an AI-model by re-training a replica twin-AI-model of the AI-model in deployment and monitoring differences (e.g., in model weights or in outputs) between the AI-model and the twin-AI-model. In other words, in this manner active surveillance of deployed AI-models is provided that can warn users and/or developers of a deteriorating performance and thus less reliable results. Users may thus more cautiously consider an AI-model result and developers can use this information to improve a future release of the AI-model and even to remove an AI-model from deployment. By using a model twin as proposed herein, further the entire method may be invisible for a user, thus without increasing the user's workload.

The invention is defined by the independent claims. Advantageous embodiments are defined in the dependent claims.

According to an aspect of the invention there is provided a method of supervised performance monitoring of an AI-model in deployment using a twin AI-model, wherein the twin AI-model initially comprises a replica of the AI-model, the method comprising:
- generating, given an input to the AI-model, an AI-output;
- receiving a user feedback on the AI-output;
- re-training at least a part of the twin-AI-model based on the input and the user feedback; and
- comparing the twin-AI-model with the AI-model to monitor AI-model performance.

In this manner, differences between the AI-model and the twin-AI-model highlight when repeated user feedback of the AI-model outcome is negative, e.g., when the AI-model output is rejected. Further, the feedback may not be for the entire AI-model as a whole, but may be individually for a type of exam or image. For example, only in lung X-ray imaging the AI-model output may frequently be rejected, while for rib fractures the AI-output is frequently accepted. By using a re-trained twin-AI-model, the performance monitor may indicate low confidence for lung X-ray images, but high confidence for rib fractures.

In an example, the user feedback comprises any one or a combination of:
- an acceptance or rejection of the AI-output; and
- a user provided diagnostic label.

In an example, the twin-AI model is re-trained through backpropagation, wherein backpropagation optionally comprises adjusting the weights of the twin-AI model by evaluating a loss function, wherein the loss function measures a difference between the twin-output and the user feedback.

In an example, comparing the twin-AI-model with the AI-model comprises any one or combination of:
- comparing at least part of the twin-AI-model weights with at least part of the AI-model weights; and
- comparing, given the same input to the AI-model and the twin-AI-model, the output of the AI-model with an output of the twin-AI-model.

For example, output labels of the AI-model (e.g., fetal age or measurements, tumor detected, etc.) and the twin-AI-model may be compared directly. Alternatively, the model weights may be compared by determining a feature vector.

According to an aspect of the invention there is provided a method for unsupervised performance monitoring of an AI-model in deployment using a twin-AI-model, wherein the twin-AI-model initially comprises a replica of the AI-model, the method comprising:
- generating, given an input to the twin-AI-model, a twin-input prediction;
- re-training at least a part of the twin-AI model based on the twin-input prediction and the input; and
- comparing the twin-AI model with the AI-model to monitor AI-model performance.

In this manner, the performance of the feature extraction and prediction is monitored without requiring user intervention. For example, when repeatedly given an input to the AI-model that is different to the training data set and re-training the twin-AI-model, not all relevant features may be extracted. The twin-AI-model, will with repeated such inputs, learn to also extract these features and better predict the input. Thus, at some point the twin-AI-model will differ from the main AI-model, e.g., in having different weights, and/or in predicting a different input. A user may thus be notified that the features extracted from a given input are not considered sufficient for a meaningful AI-output. This type of monitoring may intuitively also be seen as outlier identification, wherein input data different from the training data is identified.

In an example, the twin-AI model is re-trained through backpropagation, wherein backpropagation optionally comprises adjusting the weights of the twin-AI model by evaluating a loss function wherein
the loss function measures a difference between the twin-input prediction and the input.

In an example, comparing the twin-AI-model with the AI-model comprises any one or combination of:
- comparing at least part of the twin-AI-model weights with at least part of the AI-model weights; and
- comparing, given the same input to the AI-model and the twin-AI-model, an input prediction of the AI-model with an input prediction of the twin-AI-model.

For example, given the same input to the AI-model and the twin-AI-model, the features extracted by each model may be compared with one another. Additionally or alternatively, from the extracted features, the input may be re-created by either model, and the input-prediction of the twin-AI-model and AI-model may be compared. In a similar manner, the feature extraction and prediction vectors may be compared. In other words, the weights of the parts of the models performing feature extraction and/or input prediction, e.g., the autoencoders, may be compared.

In an example, the twin-AI-model and the AI-model comprise autoencoders;
wherein re-training at least a part of the twin-AI model based on the twin-input prediction and the input comprises re-training the autoencoder of the twin-AI model based on comparing the twin-input prediction and the input; and
wherein comparing at least part of the twin-AI-model weights with at least part of the AI-model weights comprises comparing the autoencoder weights of the twin-AI-model with the autoencoder weights of the AI-model.

In an example, comparing the twin-AI-model with the AI-model to monitor AI-model performance comprises:
- performing forward passes through the AI-model and logging an AI-feature vector;
- performing forward passes through the twin-AI-model and logging a twin-feature vector; and
- computing a deviation between the twin-feature vector and the AI-feature vector.

In an example, the steps preceding comparing the twin-AI-model with the AI-model are performed for a plurality of inputs, before performing the step of:
- comparing the twin-AI-model with the AI-model.

In an example, the method further comprises:
- generating a performance metric based on
   - comparing the twin-AI-model with the AI-model.

In an example, evaluating the loss function comprises computing gradients of the loss function.

In an example, a plurality of re-trained twin-AI models are used to generate an updated AI-model through federated learning.

By generating the re-trained twin-AI-models, for example, locally at each deployment site, the training data set is in a way expanded to all input-output relationships seen by the AI. Due to privacy concerns, using such data for direct re-training is often cumbersome. However, using the re-trained models as described herein, only weights need to be shared for further developments. The resulting re-trained twin-AI-models may thus be received, retrieved or in any other way obtained and combined to form an updated AI-model. This updating according to federated learning is often accompanies weighing the individual twin-AI-models from different deployment sites and additional consistency training to ensure good performance of the updated AI-model.

According to an aspect of the invention there is provided a computer program product or a non-transitory storage medium comprising instructions which when executed by a processor, cause the processor to carry out any of the methods disclosed herein.

According to an aspect of the invention there is provided a system for monitoring Artificial Intelligence, AI, model performance in deployment, the system comprising a processor configured to carry out any of the methods disclosed herein.

These and other aspects of the invention will be apparent from and elucidated with reference to the embodiments described hereinafter.

### BRIEF DESCRIPTION OF THE DRAWINGS

Fig. 1 shows a schematic of a method according to the invention.
Fig. 2 shows a schematic of federated learning according to an embodiment of the invention.
Fig. 3 shows an example implementation of herein disclosed methods according to the invention.
Fig. 4 shows an example implementation of herein disclosed methods according to the invention.

### DETAILED DESCRIPTION OF EMBODIMENTS

The invention relates to methods for monitoring AI-model performance during deployment. In particular there are disclosed a supervised and an unsupervised manner of monitoring AI-model performance. The supervised method is based on a user interaction, e.g., a historic user feedback on the AI-output. The unsupervised method on the other hand does not require user interaction.

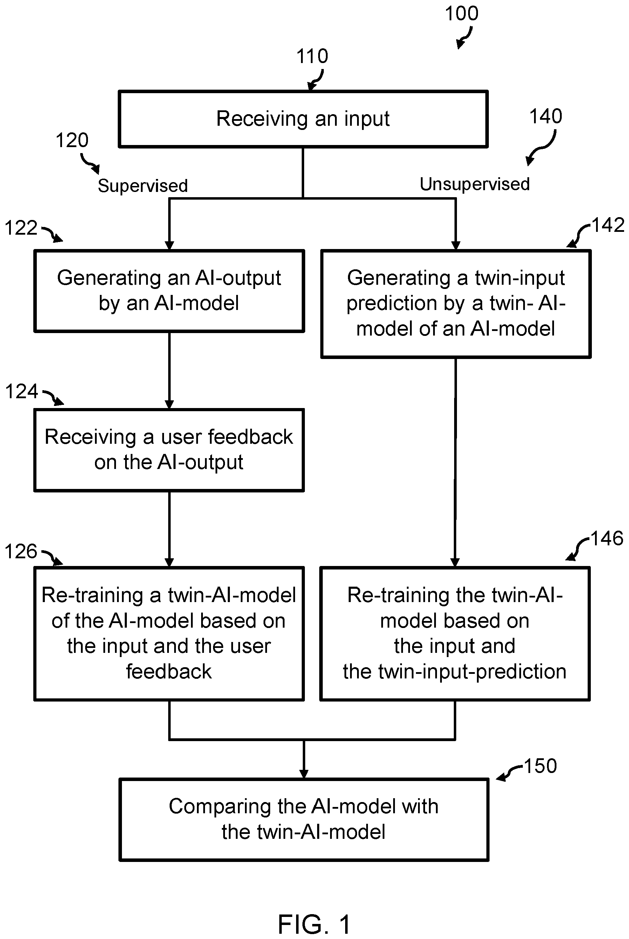

Fig. 1 discloses a method 100 for performance monitoring of an AI-model in deployment using a twin-AI-model. The twin-AI-model initially, i.e., at the beginning of deployment and before performing method 100, is an exact replica of the AI-model.

The first step 110 of a method 100 comprises receiving, retrieving or in any other way obtaining 110 an input. In an example this input comprises a medical image, for example, an X-ray image, an ultrasound image, a CT image or an MR image. The input may comprise any one or a combination of and not limited to:
- a medical image; e.g., computed tomography image, magnetic resonance image, X-ray image or ultrasound image.
- a time series; e.g., from electrocardiography, pulsed wave doppler ultrasound or an Oxygen sensor,
- patient information,
- medical imaging system log data,
- annotations, and,
- historical data,

After the first step, Fig. 1 shows two alternate embodiments. In the first (left) branch, a supervised performance monitoring manner 120 is shown. In the second (right) branch, an unsupervised performance monitoring manner 140 is shown. The main difference between these two branches (i.e., supervised and unsupervised ways of performance monitoring) comprises that in the supervised approach a user interaction with the method is required, while for the unsupervised approach no user interaction is necessary. For both branches, 120 and 140, the starting point is a deployed main AI-model and an initially exact replica of the AI-model called twin-AI-model. As the method progresses, the twin-AI-model is re-trained and therefore will start to differ from the AI-model. Based on these differences the performance monitoring of the AI-model takes place.

In branch 120, the supervised method of performance monitoring of the AI-model in deployment using a twin-AI-model, wherein the twin-AI-model initially comprises a replica of the AI-model, comprises the steps of:
- generating 122, based on inputting the received input into the main AI-model, an AI-output;
- receiving 124 a user feedback on the output of the main AI-model (i.e., AI-output); and
- re-training 126 at least a part of the twin-AI-model based on the input and the user feedback.

The steps of receiving and re-training may be considered as part of the performance monitoring.

The output may comprise any one or a combination of and not limited to:
- a medical diagnosis,
- a feature detection,
- an anomaly detection,
- a segmentation map,
- an anatomical measurement,
- a treatment recommendation,
- a risk assessment,
- a medical report,

The user feedback may be for example an acceptance or rejection of the AI-output. The user may thus accept or reject the AI-output. In some examples, the user may also provide a user provided diagnostic label. This diagnostic label may be user typed. In other examples the diagnostic label may be selected from a pre-defined list of diagnostic labels, thereby maintaining some form of uniformity of user feedbacks across different users and/or for different inputs. As explained in further detail below, such uniformity can be advantageous when using these labels for future training.

The re-training of at least part of the twin-AI-model based on the input and the user feedback may comprise conventional AI training. For instance the input and user feedback may comprise the input and the output respectively of a data pair as used for training. For clarity, when referring to the input and output of a data pair, the terms predictor and target will be used. The twin-AI-model may thus be re-trained to output the target, i.e., the user input, given the predictor, i.e., the input. Training methods themselves are considered known to someone skilled in the art. For example, backpropagation may be used to re-train the twin-AI-model. Intuitively, backpropagation can be understood as an adapting of the weights of the model according to a loss function to maximize the reward given to the twin-AI-model. In an example, backpropagation comprises adjusting the weights of the twin-AI model by evaluating a loss function wherein the loss function measures a difference between the twin-output and the user feedback. More concretely, backpropagation works by propagating the error backwards from the output layer to the input layer of a network of the AI, allowing for the computation of the gradients with respect to the loss function using the chain rule of calculus.

Using this manner of re-training the twin-AI-model, the twin-AI-model will basically expand its possibilities of prediction to new input distributions not considered in the training of the AI-model. In other words, the twin-AI-model weights may adjust to specific patient input distributions not known or considered initially. The twin-AI-model may thus be seen as an improved AI-model. However, such a twin-AI-model may be less robust due to a lack of refinement, leading to potentially unwanted and incorrect results. Furthermore, such a model is easier to be hampered with. Therefore, according to branch 120 of method 100, it is preferably to not use the twin-AI-model for any medical function, and rather use the twin-AI-model and/or an output of the twin-AI-model to compare with the AI-model and/or an AI-model output to monitor the AI-model performance in step 150 as described in more detail below.

In branch 140, the unsupervised method of performance monitoring of the AI-model in deployment using a twin-AI-model, wherein initially the twin-AI-model comprises a replica of the AI-model, comprises the steps of:
- generating 142, based on an input into the twin-AI-model, a twin-input prediction; and
- re-training 146 at least a part of the twin-AI-model based on the input and the twin-input prediction.

The re-training of at least part of the twin-AI-model based on the input and the twin-input prediction may comprise conventional AI training. For instance the input and twin-input prediction may comprise the output and the input respectively of a data pair used for training. For clarity, when referring to the input and output of a data pair, the terms predictor and target will be used. The twin-AI-model may thus be re-trained to output the target, i.e., the input, given the predictor, i.e., the twin-input prediction. Training methods themselves are considered known to someone skilled in the art. For example, backpropagation may be used to re-train the twin-AI-model. Intuitively, backpropagation can be understood as an adapting of the weights of the model according to a loss function to maximize the reward given to the twin-AI-model. In an example, backpropagation comprises adjusting the weights of the twin-AI model by evaluating a loss function wherein the loss function measures a difference between the twin-input prediction and the input. More concretely, backpropagation works by propagating the error backwards from the output layer to the input layer of a network of the AI, allowing for the computation of the gradients with respect to the loss function using the chain rule of calculus.

In an example, the AI-model and the twin-AI-model comprise autoencoders, wherein the autoencoders comprise each an encoder and a decoder. The encoder of an autoencoder may be understood as the feature extraction part or compressor of the autoencoder. In other words, the encoder compresses the input by only extracting the relevant features. The decoder of an autoencoder may be understood as the re-constructor of the autoencoder. In other words, given the features extracted by the encoder, the decoder attempts to re-construct the input. If both parts are well trained, the decoder should be able to reconstruct at least the relevant features of the input.

In examples, where the AI-model and the twin-AI-model comprise autoencoders, re-training at least a part of the twin-AI model based on the twin-input prediction and the input may comprise re-training the autoencoder. In an example, re-training the autoencoder may comprise re-training both the encoder and the decoder. In other words, both the feature extraction of the input image and the re-constructor of the input image are re-trained. In other examples, re-training the autoencoder may comprise only re-training the decoder. In such cases, the feature extraction from the input remains the same for both the AI-model and the twin-AI-model, and only the re-constructor of the twin-AI-model is re-trained. Retraining only the decoder can be beneficial in certain situations, such as when transfer learning can be used to improve the performance or efficiency of an existing autoencoder model. Specifically, the encoder of a pre-trained autoencoder model contains learned weights and parameters that can be useful for a different task or problem. Therefore, retraining the entire autoencoder model (both the encoder and decoder) from scratch for the new task may not be the most efficient method, especially if the new task is similar to the original training task. Instead, by freezing the weights of the pre-trained encoder and only retraining the decoder, the model can more quickly adapt to the new task by only updating the weights of the decoder layers. Retraining only the decoder can be useful in situations where the original training data is no longer available, and the encoder weights need to be fixed. By keeping the encoder weights fixed and only retraining the decoder, it is possible to still obtain useful outputs from the model for new inputs, while reducing the risk of overfitting to a new training dataset.

As last step 150, method 100 comprises comparing the main AI-model with the re-trained twin AI model. This comparison may be performed for each input. Alternatively, the comparison step is only performed after a plurality of inputs has been received, for example after pre-defined number of inputs has been received, or after a particular condition has been met. The condition may for example be a degree of changes in the re-trained twin-AI-model. In this manner, a plurality of inputs may be processed, i.e., used for re-training a twin-AI-model, before the AI-model and the twin-AI-model are compared with each other.

In the case of branch 120, comparing the AI-model with the twin-AI-model may comprise comparing an AI-model output with a twin-AI-model output when given the same input. For example, a pixelwise comparison may be performed. In an alternative example, comparing the AI-model with the twin-AI-model may comprise comparing the weights of each model with each other. For example, it is possible to determine a feature vector from the AI-model and the twin-AI-model and calculate a deviation between the two feature vectors. For example, a Euclidean distance, a Manhattan distance, a cosine similarity, a Jaccard similarity, a Pearson correlation coefficient, a Hamming distance, a Minkowski distance, a Mahalanobi distance or a Chebyshev distance may be computed between the AI-model feature vector and the twin-AI-model feature vector.

In an example, the results of the comparison are further used to generate a performance metric of the AI-model. For example, a distance or deviation determined as disclosed herein may be used to determine a performance metric. The performance metric may be determined to be good if the deviation or distance is small, while the performance metric may be determined to be bad is the deviation or distance exceeds a pre-defined threshold. The performance may also be purely binary. For example, if the twin-AI-model output and the AI-model output coincide, the performance metric may be assigned a high value. If on the other hand, the twin-AI-model output and the AI-model output deviate or differ from each other, the performance may be given as bad or the AI-model output may be given with a low confidence score.

The twin-AI-model is thus according to branch 120 of method 100 used to monitor the performance of the AI-model by detecting differences in the re-trained weights or of the output itself between the AI-model and the twin-AI-model. The resulting performance may be quantified in a performance metric that is high when the models or the outputs thereof are similar, and the performance metric may be low in case the models or the outputs therefor are very different.

In the case of branch 140, comparing the AI-model with the twin-AI-model to monitor the AI-model performance may comprise comparing a twin-input prediction with an AI-input prediction when given the same input. In other words, the output of the autoencoder is compared to each other. In this manner, the feature extraction and/or reconstruction of the input is compared to each other. It is additionally or alternatively also possible to compare the weights of the twin-AI-model with the weights of the AI-model. In cases where the twin-AI-model and the AI-model comprise autoencoders, comparing the twin-AI-model and the AI-model weights may comprise comparing the weights of the encoder and/or decoder of the twin-AI-model and the AI-model with each other. In an example, comparing the twin-AI-model with the AI-model to monitor AI-model performance comprises: performing forward passes through the AI-model and logging an AI-feature vector; performing forward passes through the twin-AI-model and logging a twin-feature vector; and computing a deviation between the twin-feature vector and the AI-feature vector. The deviation may be computed via any known or as disclosed herein means.

In an example, only the encoders are compared with each other, thereby determining whether the twin-AI-model and the AI-model extract the same features as important from the same input.

In an example, only the decoders are compared with each other, thereby determining whether the twin-AI-model and the AI-model re-construct the input using the same or similar features extracted from the input by the encoder.

In an example, the results of the comparison are further used to generate a performance metric of the AI-model. For example, based on a distance or deviation determined as disclosed herein, may be used to determine a performance. The performance may be determined to be good if the deviation or distance is small, while the performance may be determined to be bad is the deviation or distance exceed a pre-defined threshold. The performance may also be purely binary. For example, if the twin-AI-model twin-input prediction and an AI-input prediction given the same input are similar (e.g., compared via pixel-by-pixel comparison), the performance may be considered to be good or the AI-output may be given with a high confidence. If on the other hand, the twin-input prediction and the AI-input predicition deviate or differ from each other, the performance may be given as bad or the AI-model output may be given with a low confidence score.

The unsupervised branch 140 of method 100 may be seen as an alternative to checking whether the given input to the AI-model lies within the input distribution on which the AI-model has been trained.

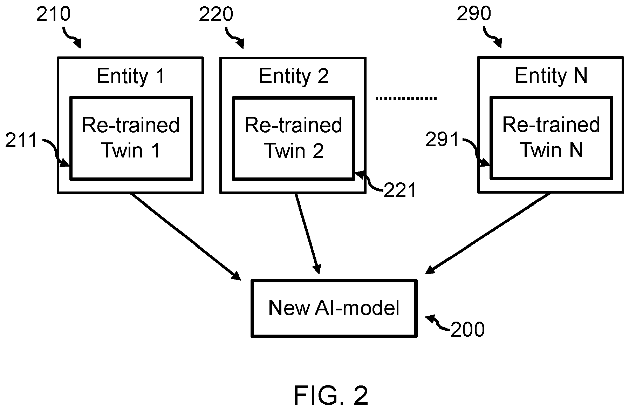

The re-trained twin-AI-models that result from method 100 may be used for federated learning as shown in Fig. 2. Federated learning is a distributed machine learning framework that enables multiple entities 210, 220, ..., 290 to collaboratively train a shared model on local data without exchanging data directly. A twin-AI-model 211, 221, ..., 291 of an AI-model deployed at ach entity may be trained on a subset of local data at each participating entity (e.g., each hospital where the AI-model is deployed) using local computing resources. The updated model is then sent back to the central server or collected by other means. The model parameters of each collected or received re-trained twin-AI-model are aggregated and a new, improved AI-model 200 is generated. This process of improving the AI-model may be repeated multiple times and may be performed for any number of entities. While each entity is shown in Fig. 2 with a single twin-AI-model, there may be multiple twin-AI-models originating from the same entity.

An advantage of federated learning is that the privacy and security of local data is maintained. In other words, hospitals do no need to share their data. To achieve this, local data remains on the device and is never shared directly. Instead, only model weights are shared, which are aggregated and used to train the new, improved AI-model. To mitigate potential effects of heterogeneous data and local model errors or hampering updates, federated learning may involve advanced algorithms for weighting and biasing training examples and updates to minimize the impact of these factors on the final model performance.

By enabling training of a new improved model on decentralized local data, federated learning is particularly beneficial for applications where data privacy is paramount or where data is distributed across many entities. This is particularly the case in the medical environment where an AI-model by the nature of it deals with patient data and is distributed to many different medical providers

### (e.g., GPs, hospitals, etc.)

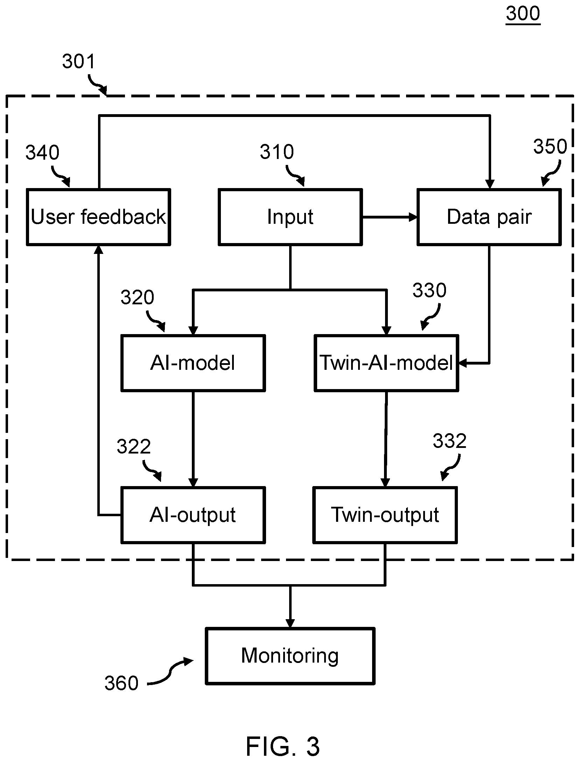

Fig. 3 shows an example implementation 300 of method 100 via branch 120 in deployment. According to this example:
i) First an input 310 is received, acquired, or determined by any other means. For example, a medical image is acquired via a medical imaging system (e.g., an X-ray imaging system, an ultrasound imaging system, a computed tomography imaging system, etc.).
ii) The input 310 is then provided to an AI-model 320 and a twin 330 of said AI-model. It is to be noted that the first time method 100 is performed the twin is identical to the AI-model, while as more inputs are processed according to method 100, the twin-AI-model will differ from the AI-model.
ii) The AI-model and the twin-AI-model will each generate an output or result 322, 332. For example, the AI-model may provide an image finding based on an input medical image. The image finding may for example be an identification of a cancerous tumor. The twin-AI-model may provide a similar (the same or substantially the same) or different image finding based on the same input medical image.
   The AI-output may in deployment be provided to a user for review without further steps. In this manner, the workload of practitioners can be maintained the same compared to the use of a not-monitored AI-model.
iii) However, the user may review the AI-output (not the twin-output) and provide a user feedback 340. In some examples, only allowed users may be allowed to provide user-feedback to guarantee the quality of the feedback or to balance workload. For example, it is not desirable that unreliable user-feedback is used if the user does not have sufficient time to properly review the AI-output.
iv) The user feedback 340 together with the twin-output 332 are then combined into a new data pair 350 that is used for re-training the twin-AI-model.
v) The steps i-iv as defined above and shown within box 301 in Fig. 3 may be repeated for a plurality of inputs.
vi) Monitoring 360 of the AI-model is performed by comparing the AI-output with the twin-output. Initially, these two outputs will be the same as the twin-AI-model comprises a replica of the AI-model. However, as the number of processed inputs increases, the twin-AI-model weights may differ from the AI-model weights, such that the AI-output and the twin-AI-output may differ.

Based on the difference between the AI-output and the twin-output the AI-model performance may be monitored. For example, if the AI-output is determined to differ substantially from the twin-output a warning may be provided to a reviewer or the deployer of the AI-model.

Based on the difference between the AI-output and the twin-output an AI-model confidence may be generated. For example, a reviewer may be informed that the AI-output is of high confidence if the AI-output and the twin-output show good agreement. Alternatively, if the twin-output differs significantly from the AI-output, a low confidence may be conveyed to the user.

While this example describes the comparison based on the AI-output and the twin-output, it is also possible to compare the AI-model and twin-AI-model weights as described herein.

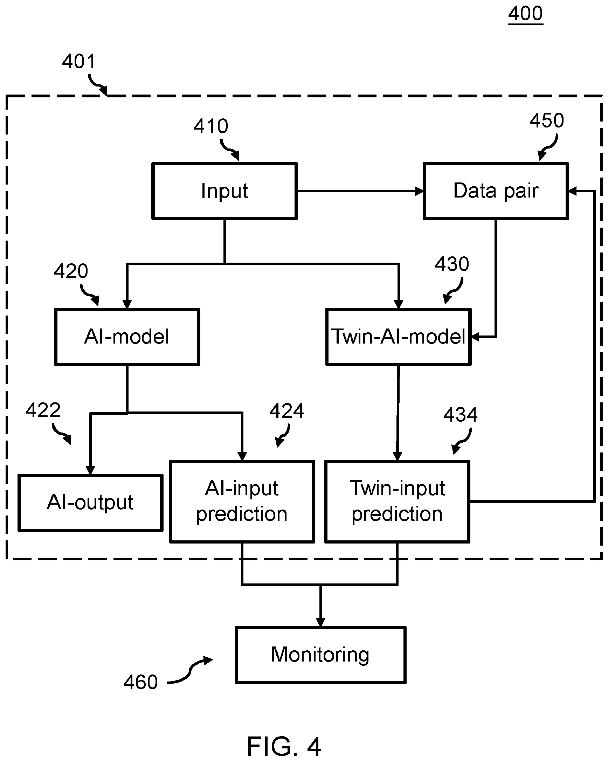

Fig. 4 shows an example implementation 400 of method 100 via branch 140 in deployment. According to this example:
i) First an input 410 is received, acquired, or determined by any other means. For example, a medical image is acquired via a medical imaging system (e.g., an X-ray imaging system, an ultrasound imaging system, a computed tomography imaging system, etc.).
ii) The input 410 is then provided to an AI-model 420 and a twin 430 of said AI-model. It is to be noted that the first time method 100 is performed the twin is identical to the AI-model, while as more inputs are processed according to method 100, the twin-AI-model will differ from the AI-model.
iii) Similar to when using non-monitored AI-models, the AI-model may at this stage provide a user or reviewer with an AI-output 422 comprising the findings of the AI for the given input. Additionally, the AI-model may also provide an AI-input prediction 424. The input prediction essentially comprises a re-construction of the input based on the features extracted by each AI-model. For example, for processing an image an AI-model will extract what it has learnt to be the important features of said image. This may be done by an encoder. A decoder may then be used to re-construct the input from the features extracted by the encoder. The AI-input prediction may be generated for each input such that for each input and AI-output a monitoring step may be performed. Alternatively, the AI-input prediction is only performed when a monitoring step is performed. This may lower computational resources.
iv) The twin-AI-model will generate an input prediction 434. The input prediction essentially comprises a re-construction of the input based on the features extracted by each AI-model. For example, for processing an image an AI-model will extract what it has learnt to be the important features of said image. This may be done by an encoder. A decoder may then be used to re-construct the input from the features extracted by the encoder.
v) The twin-input prediction 434 and the input 410 will be combined into a new data pair 450 which is then used to re-train the twin-AI-model. In this implementation, the encoder and decoder of the twin-AI-model are re-trained to monitor whether the same features are considered to be relevant for extraction from the input and re-construction of the input.
vi) Monitoring 360 of the AI-model is performed by for example comparing the AI-input prediction with the twin-input prediction. Initially, these two input predictions will be the same as the twin-AI-model comprises a replica of the AI-model. However, as the number of processed inputs increases, the twin-AI-model weights may differ from the AI-model weights, such that the AI-input prediction and the twin-input prediction may differ.

Based on the difference between the AI-input prediction and the twin-input prediction the AI-model performance may be monitored. For example, if the AI-input prediction is determined to differ substantially from the twin-input prediction a warning may be provided to a reviewer or the deployer of the AI-model. In such a case, a particular input image may for example not have been part of the original training data set of the AI-model.

Based on the difference between the AI-input prediction and the twin-input prediction an AI-model confidence may be generated. For example, a reviewer may be informed that the AI-output is of high confidence if the AI-input prediction and the twin-input prediction show good agreement. Alternatively, if the twin-input prediction differs significantly from the AI-input prediction, a low confidence may be conveyed to the user.

While this example describes the comparison based on the AI-input prediction and the twin-input prediction, it is also possible to compare the AI-model and twin-AI-model weights as described herein.

According to an embodiment there is provided a computer program product or non-transitory medium comprising instructions which when executed by a processor, cause the processor to carry out any of the methods as disclosed herein.

According to an embodiment there is provided a system for monitoring Artificial Intelligence, AI, model performance in deployment, the system comprising a processor configured to carry out any of the methods as disclosed herein.

In an example, the system further comprises an imaging apparatus, wherein the imaging apparatus is configured to acquire images. The imaging apparatus may for example be an imaging sensor such as an ultrasound probe or multiple sensors as required in an X-ray imaging system, a computed tomography imaging system or magnetic resonance imaging system.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention may be implemented by means of hardware comprising several distinct elements, and/or by means of a suitably programmed processor. In the device claim enumerating several means, several of these means may be embodied by one and the same item of hardware. Measures recited in mutually different dependent claims may advantageously be used in combination.

## Claims

1. A method (100, 300) of supervised (120) performance monitoring of an AI-model (320) in deployment using a twin AI-model (330), wherein the twin AI-model initially comprises a replica of the AI-model, the method comprising:
- generating (122), given an input (310) to the AI-model, an AI-output (322);
- receiving (124) a user feedback (340) on the AI-output;
- re-training (126) at least a part of the twin-AI-model based on the input and the user feedback; and
- comparing (150) the twin-AI-model (330) with the AI-model to monitor (360) AI-model performance.

2. The method of claim 1, wherein the user feedback comprises any one or a combination of:
- an acceptance or rejection of the AI-output; and
- a user provided diagnostic label.

3. The method of claim 1 or 2, wherein the twin-AI model is re-trained through backpropagation, wherein backpropagation optionally comprises adjusting the weights of the twin-AI model by evaluating a loss function, wherein the loss function measures a difference between the twin-output and the user feedback.

4. The method of any one of claims 1 to 3, wherein comparing the twin-AI-model with the AI-model comprises any one or combination of:
- comparing at least part of the twin-AI-model weights with at least part of the AI-model weights; and
- comparing, given the same input to the AI-model and the twin-AI-model, the output of the AI-model with an output of the twin-AI-model.

5. A method (100, 400) for unsupervised (140) performance monitoring of an AI-model (420) in deployment using a twin-AI-model (430), wherein the twin-AI-model initially comprises a replica of the AI-model, the method comprising:
- generating (142), given an input (410) to the twin-AI-model, a twin-input prediction (434);
- re-training (146) at least a part of the twin-AI model based on the twin-input prediction and the input; and
- comparing (150) the twin-AI model with the AI-model to monitor (460) AI-model performance.

6. The method of claim 5, wherein the twin-AI model is re-trained through backpropagation, wherein backpropagation optionally comprises adjusting the weights of the twin-AI model by evaluating a loss function wherein the loss function measures a difference between the twin-input prediction and the input.

7. The method of claim 5or 6, wherein comparing the twin-AI-model with the AI-model comprises any one or combination of:
- comparing at least part of the twin-AI-model weights with at least part of the AI-model weights; and
- comparing, given the same input to the AI-model and the twin-AI-model, an input prediction of the AI-model with an input prediction of the twin-AI-model.

8. The method of claim 7, wherein the twin-AI-model and the AI-model comprise autoencoders;
wherein re-training at least a part of the twin-AI model based on the twin-input prediction and the input comprises re-training the autoencoder of the twin-AI model based on comparing the twin-input prediction and the input; and
wherein comparing at least part of the twin-AI-model weights with at least part of the AI-model weights comprises comparing the autoencoder weights of the twin-AI-model with the autoencoder weights of the AI-model.

9. The method of any one of claims 5 to 8, wherein comparing the twin-AI-model with the AI-model to monitor AI-model performance comprises:
- performing forward passes through the AI-model and logging an AI-feature vector;
- performing forward passes through the twin-AI-model and logging a twin-feature vector; and
- computing a deviation between the twin-feature vector and the AI-feature vector.

10. The method of any one of claims 1 to 9, wherein the steps preceding comparing the twin-AI-model with the AI-model are performed for a plurality of inputs, before performing the step of:
- comparing the twin-AI-model with the AI-model.

11. The method of any one of claims 1 to 10 further comprising:
- generating a performance metric based on
- comparing the twin-AI-model with the AI-model.

12. The method of claim 3 or 6, wherein evaluating the loss function comprises computing gradients of the loss function.

13. The method of any of claims 1 to 12, wherein a plurality of re-trained twin-AI models (211, 221, 291) are used to generate an updated AI-model (200) through federated learning.

14. A computer program product comprising instructions which when executed by a processor, cause the processor to carry out the method of any one of claims 1 to 13.

15. A system for monitoring Artificial Intelligence, AI, model performance in deployment, the system comprising a processor configured to carry out the method of any one of claims 1 to 13.
